# EUROPEAN PATENT SPECIFICATION

(11) **EP 3 492 728 B1**
(45) Date of publication and mention of the grant of the patent: **04.11.2020**
(21) Application number: 18208213.1
(22) Date of filing: 26.11.2018
(51) Int. Cl.: F02D 41/40, F02D 41/38, F02M 63/02, F02D 41/30, F02M 59/36

(54) **FUEL PUMP CONTROLLER AND CONTROL METHOD FOR AN INTERNAL COMBUSTION ENGINE**
KRAFTSTOFFPUMPENSTEUERGERÄT UND STEUERUNGSVERFAHREN FÜR EINEN VERBRENNUNGSMOTOR
ORGANE DE COMMANDE DE POMPE DE CARBURANT ET PROCÉDÉ DE COMMANDE POUR UN MOTEUR À COMBUSTION INTERNE

(30) Priority: 29.11.2017 JP 2017229581
(43) Date of publication of application: 05.06.2019
(73) Proprietor: TOYOTA JIDOSHA KABUSHIKI KAISHA, Toyota-shi, Aichi-ken 471-8571 (JP)
(72) Inventor: SUGIMOTO, Motohiro, Toyota-shi, Aichi-ken 471-8571 (JP); IDOGAWA, Masanao, Toyota-shi, Aichi-ken 471-8571 (JP); MURAKAMI, Narumi, Toyota-shi, Aichi-ken 471-8571 (JP)
(74) Representative: Cabinet Beau de Loménie

(56) References cited:
- EP-A1- 2 762 718
- US-A1- 2010 163 004
- US-A1- 2014 053 812
- US-A1- 2015 300 287
- US-B2- 7 331 328

## Description

### BACKGROUND

The present disclosure relates to a fuel pump controller and a control method adapted for an internal combustion engine.

The internal combustion engine disclosed in Japanese Laid-Open Patent Publication No. 2002-213326 includes a first high-pressure fuel pump and a second high-pressure fuel pump configured to discharge by further increasing pressure of the fuel pressure-fed from a feed pump. The first high-pressure fuel pump discharges the fuel to a first high-pressure delivery pipe, and the second high-pressure fuel pump discharges the fuel to a second high-pressure delivery pipe. The first high-pressure delivery pipe and the second high-pressure delivery pipe communicate with each other by a connecting pipe. Each high-pressure fuel pump described above is controlled by a fuel pump controller. When a required amount of a fuel supply amount of the first high-pressure delivery pipe and the second high-pressure delivery pipe falls below a maximum fuel discharge amount of a single high-pressure fuel pump, the fuel pump controller drives either one of the first high-pressure fuel pump and the second high-pressure fuel pump, and stops the other one.

According to the invention disclosed in the above document, depending on the conditions, even though the internal combustion engine may be driven, sometimes either one of the high-pressure fuel pump of the two high-pressure fuel pumps may be stopped for a long period of time. However, the problems that occur in a case such as that described above have not been studied at all. US2010163004 (A1) relates to a start-up control device and a start-up control method for an internal combustion engine equipped with a fuel injection mechanism (in-cylinder injection-purpose injector) that injects fuel toward the inside of a cylinder at high pressure, or an internal combustion engine equipped with a fuel injection mechanism (intake passageway injection-purpose injector) that injects fuel toward the inside of an intake port, or an internal combustion engine equipped with both of these fuel injection mechanisms.

US7331328 (B2) relates to a control device of a fuel system of an internal combustion engine that includes a fuel injection mechanism (in-cylinder injector) for injecting fuel into a cylinder at a high pressure, or an internal combustion engine that includes, in addition to the above fuel injection mechanism, another fuel injection mechanism (intake manifold injector) for injecting fuel into an intake manifold or an intake port.

US2014053812 (A1) relates to a fuel injection control system for an internal combustion engine equipped with a low pressure fuel pump for pumping up fuel from a fuel tank and a high pressure fuel pump for boosting the pressure of the fuel discharged from the low pressure pump.

### SUMMARY

The present invention relates to a fuel pump controller according to claim 1 and a control method of a fuel pump according to claim 5.

In accordance with a first aspect of the present disclosure, a fuel pump controller adapted for an internal combustion engine is provided. The internal combustion engine includes a first high-pressure fuel pump configured to discharge fuel by increasing pressure, a first fuel passage, through which the fuel discharged by the first fuel pump flows, a first fuel injection valve configured to inject the fuel supplied from the first fuel passage, a second high-pressure fuel pump configured to discharge fuel by increasing pressure, a second fuel passage, through which the fuel discharged by the second fuel pump flows, a second fuel injection valve configured to inject the fuel supplied from the second fuel passage, a connecting passage, which connects the first fuel passage and the second fuel passage to each other, and a temperature sensor configured to detect an ambient temperature of the first fuel pump or the second fuel pump. The fuel pump controller comprises a pump switching unit configured to switch a drive mode of the first fuel pump and the second fuel pump, in accordance with an operating state of the internal combustion engine, either to a twin-drive mode, in which both the first fuel pump and the second fuel pump are driven, or to a single-drive mode, in which either one of the first fuel pump and the second fuel pump is driven. The pump switching unit is configured to switch to the twin-drive mode in a state that the single-drive mode is performed in a case where the ambient temperature detected by the temperature sensor becomes equal to or higher than a first temperature at which the fuel inside one of the first fuel pump and the second fuel pump that has been stopped boils to generate vapor.

In accordance with a second aspect of the present disclosure, a control method of a fuel pump adapted for an internal combustion engine is provided. The internal combustion engine includes a first high-pressure fuel pump configured to discharge fuel by increasing pressure, a first fuel passage, through which the fuel discharged by the first fuel pump flows, a first fuel injection valve configured to inject the fuel supplied from the first fuel passage, a second high-pressure fuel pump configured to discharge fuel by increasing pressure, a second fuel passage, through which the fuel discharged by the second fuel pump flows, a second fuel injection valve configured to inject the fuel supplied from the second fuel passage, a connecting passage, which connects the first fuel passage and the second fuel passage to each other, and a temperature sensor configured to detect an ambient temperature of the first fuel pump or the second fuel pump. The control method comprises: switching a drive mode of the first fuel pump and the second fuel pump, in accordance with an operating state of the internal combustion engine, either to a twin-drive mode, in which both the first fuel pump and the second fuel pump are driven, or to a single-drive mode, in which either one of the first fuel pump and the second fuel pump is driven; and switching to the twin-drive mode in a state that the single-drive mode is performed in a case where the ambient temperature detected by the temperature sensor becomes equal to or higher than a first temperature at which the fuel inside one of the first fuel pump and the second fuel pump that has been stopped boils to generate vapor.

Other aspects and advantages of the present disclosure will become apparent from the following description, taken in conjunction with the accompanying drawings, illustrating exemplary embodiments.

### BRIEF DESCRIPTION OF THE DRAWINGS

The disclosure may be understood by reference to the following description together with the accompanying drawings:
Fig. 1 is a schematic configuration diagram of an internal combustion engine;
Fig. 2 is a flowchart concerning a flag ON/flag OFF switching process of a twin-drive mode request flag;
Fig. 3 is a flowchart concerning a switching determination process of a twin-drive mode and a single-drive mode; and
Fig. 4 is a flowchart concerning a flag ON/flag OFF switching process of a twin-drive mode request flag according to a modification.

### DETAILED DESCRIPTION

Hereinafter, an embodiment in which the present disclosure is applied to a V-6 internal combustion engine 10 will be described in accordance with the drawings.

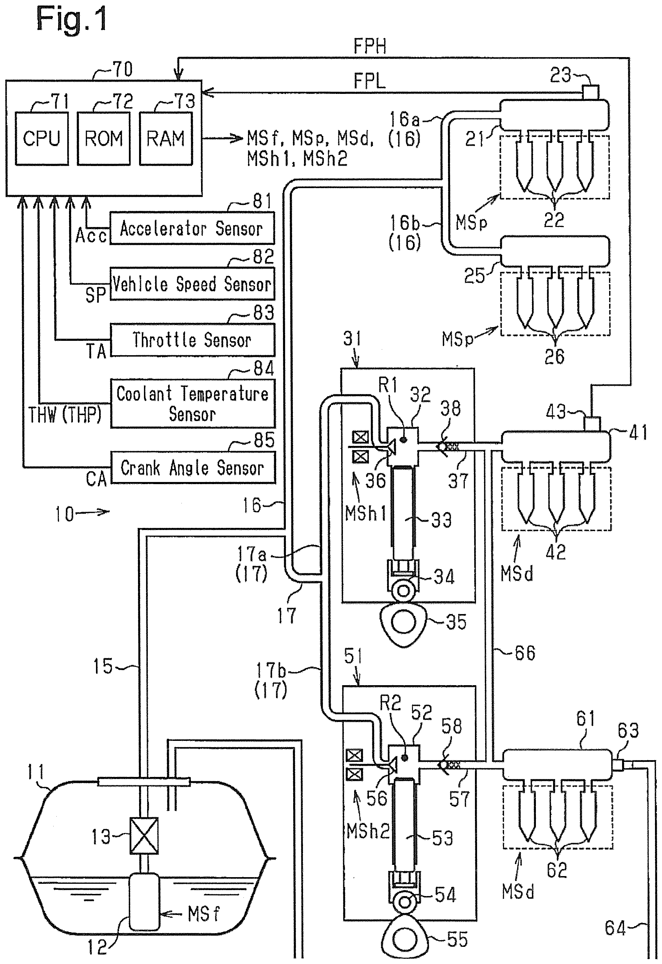

As shown in Fig. 1, the internal combustion engine 10 includes a fuel tank 11, and a motor-driven feed pump 12 arranged in the fuel tank 11. The feed pump 12 is connected to a low-pressure fuel pipe 15. The feed pump 12 pressure-feeds the fuel inside the fuel tank 11 to the low-pressure fuel pipe 15. In a portion of the low-pressure fuel pipe 15 inside the fuel tank 11, a filter 13 for filtering foreign matter contained in the fuel is provided.

The low-pressure fuel pipe 15 branches into a first low-pressure fuel pipe 16 and a second low-pressure fuel pipe 17 outside the fuel tank 11. The first low-pressure fuel pipe 16 further branches into a first branched pipe 16a and a second branched pipe 16b. The downstream end of the first branched pipe 16a is connected to a first low-pressure delivery pipe 21 configured to store a fixed amount of the fuel pressure-fed from the feed pump 12. The first low-pressure delivery pipe 21 is connected to three first port injection valves 22. Each first port injection valve 22 injects fuel into an intake port of a cylinder of one of the banks of the cylinders in the V-arrangement. In the first low-pressure delivery pipe 21, a low-pressure side fuel pressure sensor 23 for detecting an actual fuel pressure FPL in the first low-pressure delivery pipe 21 is provided.

The downstream end of the second branched pipe 16b is connected to a second low-pressure delivery pipe 25 configured to store a fixed amount of the fuel pressure-fed from the feed pump 12. The second low-pressure delivery pipe 25 is connected to three second port injection valves 26. Each second port injection valve 26 injects fuel into the intake port of a cylinder of the other bank of the cylinders in the V-arrangement.

The second low-pressure fuel pipe 17 further branches into a first branched pipe 17a and a second branched pipe 17b. The downstream end of the first branched pipe 17a is connected to a first high-pressure fuel pump 31 configured to discharge by further increasing the pressure of the fuel pressure-fed from the feed pump 12. The first high-pressure fuel pump 31 has a substantially cylinder-shaped cylinder 32 that communicates with the first branched pipe 17a of the second low-pressure fuel pipe 17. In the cylinder 32, a columnar plunger 33 that enables a reciprocating movement of the cylinder 32 in the axial direction is arranged. A pressurizing chamber R1 for pressurizing the fuel is formed by an upper end surface of the plunger 33 and an inner wall surface of the cylinder 32. At a lower end of the plunger 33, a cam follower 34 is provided. The cam follower 34 is movable in the axial direction of the cylinder 32, and is biased so as to abut an outer circumference of a cam 35. The cam 35 is configured to rotate in response to a rotation of a crankshaft of the internal combustion engine 10. The cam follower 34 converts the rotation of the cam 35 into the axial-direction movement of the cylinder 32, and transmits the converted rotation to the plunger 33. Thus, the plunger 33 performs a reciprocating movement inside the cylinder 32 in accordance with the outer-circumferential shape of the cam 35.

In a connecting portion between the pressurizing chamber R1 in the cylinder 32 and the first branched pipe 17a of the second low-pressure fuel pipe 17, an electromagnetic spill valve 36 is provided. The electromagnetic spill valve 36 is a normally open type valve that closes upon energization. The electromagnetic spill valve 36, when opened, allows for the flow of fuel between the first branched pipe 17a and the pressurizing chamber R1. The electromagnetic spill valve 36, when closed, interrupts the flow of fuel between the first branched pipe 17a and the pressurizing chamber R1.

The pressurizing chamber R1 of the first high-pressure fuel pump 31 is connected, via a first high-pressure fuel pipe 37, to a first high-pressure delivery pipe 41, which stores a fixed amount of the fuel discharged from the first high-pressure fuel pump 31. The first high-pressure delivery pipe 41 is connected to three first cylinder injection valves 42. Each first cylinder injection valve 42 is configured to inject fuel into the cylinder of one of the banks of the cylinders in the V-arrangement. In the first high-pressure delivery pipe 41, a high-pressure side fuel pressure sensor 43 for detecting an actual fuel pressure FPH in the first high-pressure delivery pipe 41 is provided. The first high-pressure fuel pipe 37 and the first high-pressure delivery pipe 41 correspond to a first fuel passage.

In the middle of the first high-pressure fuel pipe 37, a check valve 38 is provided. The check valve 38 opens when the fuel pressure inside the pressurizing chamber R1 of the cylinder 32 becomes higher than the fuel pressure inside the first high-pressure delivery pipe 41 by a predetermined pressure or more, and allows for the discharge of the fuel from the first high-pressure fuel pump 31 to the first high-pressure delivery pipe 41. The check valve 38 restricts reverse flow of fuel from the first high-pressure delivery pipe 41 to the first high-pressure fuel pump 31.

The downstream end of the second branched pipe 17b is connected to a second high-pressure fuel pump 51 configured to discharge by further increasing the pressure the fuel pressure-fed from the feed pump 12. The second high-pressure fuel pump 51 has a substantially cylinder-shaped cylinder 52 that communicates with the second branched pipe 17b of the second low-pressure fuel pipe 17. In the cylinder 52, a columnar plunger 53 that enables a reciprocating movement of the cylinder 52 in the axial direction is arranged. A pressurizing chamber R2 for pressurizing the fuel is formed by an upper end surface of the plunger 53 and an inner wall surface of the cylinder 52. At a lower end of the plunger 53, a cam follower 54 is provided. The cam follower 54 is movable in the axial direction of the cylinder 52, and is biased so as to abut an outer circumference of a cam 55. The cam 55 is configured to rotate in response to a rotation of a crankshaft of the internal combustion engine 10. The cam follower 54 converts the rotation of the cam 55 into the axial-direction movement of the cylinder 52, and transmits the converted rotation to the plunger 53. Thus, the plunger 53 performs a reciprocating movement inside the cylinder 52 in accordance with the outer-circumferential shape of the cam 55.

In a connecting portion between the pressurizing chamber R2 in the cylinder 52 and the second branched pipe 17b of the second low-pressure fuel pipe 17, an electromagnetic spill valve 56 is provided. The electromagnetic spill valve 56 is a normally open type valve that closes upon energization. The electromagnetic spill valve 56, when opened, allows for the flow of fuel between the second branched pipe 17b and the pressurizing chamber R2. The electromagnetic spill valve 56, when closed, interrupts the flow of fuel between the second branched pipe 17b and the pressurizing chamber R2.

The pressurizing chamber R2 of the second high-pressure fuel pump 51 is connected, via a second high-pressure fuel pipe 57, to a second high-pressure delivery pipe 61 that stores a fixed amount of the fuel discharged from the second high-pressure fuel pump 51. The second high-pressure delivery pipe 61 is connected to three second cylinder injection valves 62. Each second cylinder injection valve 62 is configured to inject fuel into a cylinder of the other bank of the cylinders in the V-arrangement. The second high-pressure fuel pipe 57 and the second high-pressure delivery pipe 61 correspond to a second fuel passage.

In the middle of the second high-pressure fuel pipe 57, a check valve 58 is provided. The check valve 58 opens when the fuel pressure inside the pressurizing chamber R2 of the cylinder 52 becomes higher than the fuel pressure inside the second high-pressure delivery pipe 61 by a predetermined pressure or more, and allows for the discharge of the fuel from the second high-pressure fuel pump 51 to the second high-pressure delivery pipe 61. The check valve 58 restricts the reverse flow of the fuel from the second high-pressure delivery pipe 61 to the second high-pressure fuel pump 51.

The second high-pressure delivery pipe 61 is connected to a return pipe 64 via a return valve 63. The return pipe 64 reaches up to the inside of the fuel tank 11. The return valve 63 opens when the fuel pressure inside the second high-pressure delivery pipe 61 becomes equal to or greater than a predetermined pressure. When the return valve 63 opens, the fuel inside the second high-pressure delivery pipe 61 is returned to the fuel tank 11 via the return pipe 64.

The first high-pressure fuel pipe 37 and the second high-pressure fuel pipe 57 are connected to each other by a connecting passage 66. Therefore, the fuel inside the first high-pressure fuel pipe 37 and the first high-pressure delivery pipe 41, and the fuel inside the second high-pressure fuel pipe 57 and the second high-pressure delivery pipe 61 can flow into each other via the connecting passage 66. As a result, the actual fuel pressure FPH inside the first high-pressure delivery pipe 41, the second high-pressure delivery pipe 61, and the connecting passage 66 is almost the same.

The internal combustion engine 10 described above is controlled by an electronic control unit 70. The electronic control unit 70 is a computer having a central processing unit (CPU) 71 configured to run programs (applications) and calculate various numerical values, a non-volatile ROM 72, in which programs as well as maps for arithmetic operations, or the like are saved, and a volatile RAM 73, in which data is temporarily stored during the execution of programs, etc. A program for executing a flag ON/flag OFF switching process of a twin-drive mode request flag, and a switching determination process of a twin-drive mode and a single-drive mode (described later) is saved in the ROM 72. The electronic control unit 70 that is a processing circuit including the central processing unit 71, the ROM 72, and the RAM 73 is a fuel pump controller.

The electronic control unit 70 is not limited to one that performs software processing on all processes executed by itself. For example, the electronic control unit 70 may include at least part of the processes executed by the software in the present embodiment as one that is executed by hardware circuits dedicated to execution of these processes (such as ASIC). That is, the electronic control unit 70 may be modified as long as it has any one of the following configurations (a) to (c). (a) A configuration including a processor that executes all of the above-described processes according to programs and a program storage device such as a ROM that stores the programs. (b) A configuration including a processor and a program storage device that execute part of the above-described processes according to the programs and a dedicated hardware circuit that executes the remaining processes. (c) A configuration including a dedicated hardware circuit that executes all of the above-described processes. A plurality of software processing circuits each including a processor and a program storage device and a plurality of dedicated hardware circuits may be provided. That is, the above processes may be executed in any manner as long as the processes are executed by processing circuitry that includes at least one of a set of one or more software processing circuits and a set of one or more dedicated hardware circuits.

In the electronic control unit 70, the actual fuel pressure FPL detected by the low-pressure side fuel pressure sensor 23 described above is input as a low-pressure side actual fuel pressure signal. Moreover, in the electronic control unit 70, the actual fuel pressure FPH detected by the high-pressure side fuel pressure sensor 43 is input as a high-pressure side actual fuel pressure signal. In addition, the electronic control unit 70 receives signals from an accelerator sensor 81, a vehicle speed sensor 82, a throttle sensor 83, a coolant temperature sensor 84, and a crank angle sensor 85 provided in the vehicle.

The accelerator sensor 81 is configured to detect a depression amount Acc of the accelerator pedal provided in the vehicle, and outputs, to the electronic control unit 70, the detection signal as a depression amount signal. The vehicle speed sensor 82 is configured to detect a vehicle speed SP of the vehicle, and outputs, to the electronic control unit 70, the detection signal as a vehicle speed signal. The throttle sensor 83 is configured to detect a throttle opening degree TA of the throttle valve provided in the intake passage of the internal combustion engine 10, and outputs, to the electronic control unit 70, the detection signal as a throttle opening signal. The coolant temperature sensor 84 is configured to detect a coolant temperature THW of the coolant flowing through the water jacket defined in the cylinder block of the internal combustion engine 10. The coolant temperature sensor 84 detects the coolant temperature THW at the outlet part of the water jacket, and outputs, to the electronic control unit 70, the detection signal as the coolant temperature signal. The crank angle sensor 85 is configured to detect a rotation angle CA per unit time of the crankshaft, and outputs, to the electronic control unit 70, the detection signal as the rotation angle signal.

In addition, the electronic control unit 70 receives a detection signal from an air flowmeter, which circulates air through the intake passage, and an exhaust air-fuel ratio sensor, which detects the air-fuel ratio (oxygen partial pressure) of the exhaust air in the exhaust passage. Thus, the operating state of the internal combustion engine 10 is grasped by the electronic control unit 70.

Based on the signals from the various sensors, the electronic control unit 70 calculates the required injection amount that is the required amount of the fuel injected from each first port injection valve 22 and each second port injection valve 26. The electronic control unit 70 outputs, to each first port injection valve 22 and each second port injection valve 26, an operation signal MSp corresponding to the required injection amount. Each first port injection valve 22 and each second port injection valve 26 injects fuel in a valve-open time period corresponding to the operation signal MSp.

Moreover, based on the signals from the various sensors, the electronic control unit 70 calculates the required injection amount, which is the required amount of the fuel injected from each first cylinder injection valve 42 and each second cylinder injection valve 62. The electronic control unit 70 outputs, to each first cylinder injection valve 42 and each second cylinder injection valve 62, an operation signal MSd corresponding to the required injection amount. Each first cylinder injection valve 42 and each second cylinder injection valve 62 injects fuel in a valve-open time period corresponding to the operation signal MSd.

Based on the actual fuel pressure FPL detected by the low-pressure side fuel pressure sensor 23, the electronic control unit 70 outputs an operation signal MSf of the feed pump 12. In a case where the actual fuel pressure FPL is lower than a target fuel pressure that is determined in accordance with the operating state of the internal combustion engine 10, the electronic control unit 70 increases the rotation speed of the feed pump 12. Moreover, in a case where the actual fuel pressure FPL is higher than a predetermined target fuel pressure, the electronic control unit 70 either reduces the rotation speed of the feed pump 12 or stops the feed pump 12.

In order to bring the actual fuel pressure FPH closer to the target fuel pressure that is determined in accordance with the operating state of the internal combustion engine 10, the electronic control unit 70 performs a feedback control of the first high-pressure fuel pump 31 and the second high-pressure fuel pump 51. The electronic control unit 70 functions as a pump control unit. Based on the proportional term calculated based on a deviation between the actual fuel pressure FPH and the target fuel pressure, and an integral term calculated based on an integrated value obtained by integrating the actual fuel pressure FPH and the target fuel pressure, the electronic control unit 70 performs a PI control of the required discharge amount of the first high-pressure fuel pump 31 and the second high-pressure fuel pump 51.

In accordance with the required injection amount of the first cylinder injection valve 42 and the second cylinder injection valve 62, the electronic control unit 70 also performs a feedforward control of the required discharge amount of the first high-pressure fuel pump 31 and the second high-pressure fuel pump 51. Specifically, the electronic control unit 70 increases the feedforward term such that the larger the required injection amount of the first cylinder injection valve 42 and the second cylinder injection valve 62, the larger becomes the required discharge amount of the first high-pressure fuel pump 31 and the second high-pressure fuel pump 51.

Based on the depression amount Acc indicated by the signal from the accelerator sensor 81, the vehicle speed SP indicated by the signal from the vehicle speed sensor 82, the throttle opening degree TA indicated by the signal from the throttle sensor 83, and the coolant temperature THW indicated by the signal from the coolant temperature sensor 84, or any other such signals, the electronic control unit 70 switches the drive mode of the first high-pressure fuel pump 31 and the second high-pressure fuel pump 51 to a twin-drive mode or a single-drive mode. The electronic control unit 70 functions as a pump switching unit.

The twin-drive mode is a drive mode in which both the first high-pressure fuel pump 31 and the second high-pressure fuel pump 51 are driven. The single-drive mode is a drive mode in which either one of the first high-pressure fuel pump 31 and the second high-pressure fuel pump 51 is driven, and the other one is stopped. The electronic control unit 70, upon switching from the twin-drive mode to the single-drive mode, stops the high-pressure fuel pump different from the high-pressure fuel pump stopped during the previous single-drive mode.

The electronic control unit 70 outputs, to the electromagnetic spill valve 36 of the first high-pressure fuel pump 31, an operation signal MSh1, on which the feedback control (PI control), the feedforward control, and either one of the twin-drive mode and the single-drive mode are reflected. The opening timing of the electromagnetic spill valve 36 is controlled in accordance with the operation signal MSh1. Specifically, when the actual fuel pressure FPH is to be increased, the opening time of the electromagnetic spill valve 36 when the plunger 33 has moved near the pressurizing chamber R1 is shortened. Further, when the first high-pressure fuel pump 31 is to be stopped, the electromagnetic spill valve 36 opens.

Similarly, the electronic control unit 70 outputs, to the electromagnetic spill valve 56 of the second high-pressure fuel pump 51, an operation signal MSh2, on which the feedback control (PI control), the feedforward control, and either one of the twin-drive mode and the single-drive mode are reflected. The opening timing of the electromagnetic spill valve 56 is controlled in accordance with the operation signal MSh2. Specifically, when the actual fuel pressure FPH is to be increased, the opening time of the electromagnetic spill valve 56 when the plunger 53 has moved near the pressurizing chamber R2 is shortened. Further, when the second high-pressure fuel pump 51 is to be stopped, the electromagnetic spill valve 56 opens.

Next, the switching determination process of the twin-drive mode and the single-drive mode by the electronic control unit 70 as a pump switching unit will be described. First, the flag ON/flag OFF switching process of the twin-drive mode request flag used in the switching determination process of the twin-drive mode and the single-drive mode will be described. The flag ON/flag OFF switching process is repeatedly executed in each predetermined control cycle after the internal combustion engine 10 is started and until the operation of the internal combustion engine 10 ends. Further, in the initial state immediately after the internal combustion engine 10 is started, the twin-drive mode request flag is off.

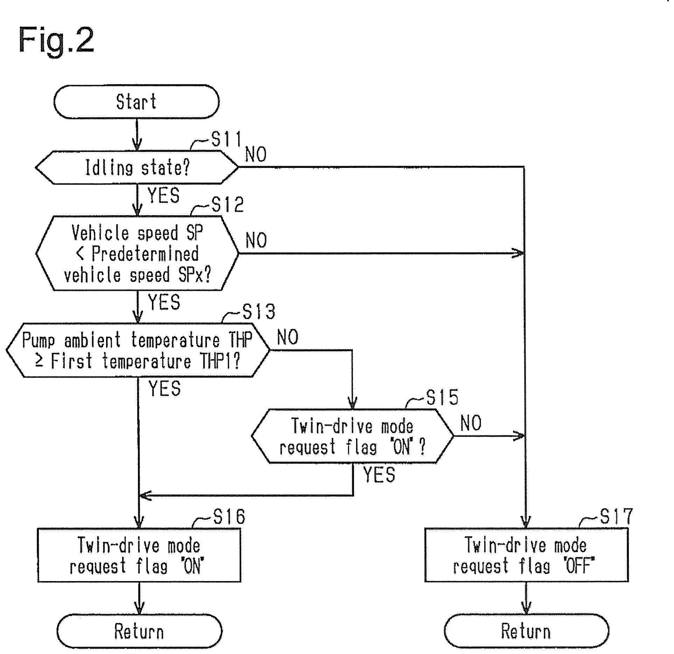

As shown in Fig. 2, when the flag ON/flag OFF switching process is executed, the electronic control unit 70 executes the processing in step S11. In step S11, the electronic control unit 70 determines whether or not the internal combustion engine 10 is in the idling state. Here, when a condition such as the depression amount Acc detected by the accelerator sensor 81 being zero or the like is satisfied, the internal combustion engine 10 is determined to be in the idling state. In a case where the internal combustion engine 10 is not in the idling state (NO in step S11), the electronic control unit 70 shifts the processing to step S17.

In step S17, the electronic control unit 70 turns off the twin-drive mode request flag. Thereafter, the electronic control unit 70 temporarily ends the series of flag ON/flag OFF switching processes, and again performs the processing in step S11 after a predetermined control cycle. When the twin-drive mode request flag has been turned off, the twin-drive mode is not requested for the first high-pressure fuel pump 31 and the second high-pressure fuel pump 51, and therefore, the single-drive mode is allowed. However, even when the twin-drive mode request flag has been turned off, the twin-drive mode is executed in a case where various conditions required for executing the single-drive mode are not satisfied.

In contrast, in a case where the internal combustion engine 10 is in the idling state (YES in step S11), the electronic control unit 70 shifts the processing to step S12.

In step S12, the electronic control unit 70 determines whether or not the vehicle speed SP detected by the vehicle speed sensor 82 is less than a predetermined vehicle speed SPx determined beforehand. The predetermined vehicle speed SPx is a vehicle speed SP by which it can be determined if the vehicle has stopped or is running at an extremely slow speed, for example, the predetermined vehicle speed SPx is 0 to 5 km per hour. In a case where the vehicle speed SP is equal to or higher than a predetermined vehicle speed (NO in step S12), the electronic control unit 70 shifts the processing to step S17, and turns off the twin-drive mode request flag. Thereafter, the electronic control unit 70 temporarily ends the series of flag ON/flag OFF switching processes, and again performs the processing in step S11 after a predetermined control cycle. In contrast, in a case where the vehicle speed SP is less than the predetermined vehicle speed SPx (YES in step S12), the electronic control unit 70 shifts the processing to step S13.

In step S13, the electronic control unit 70 determines whether or not the pump ambient temperature THP that is the ambient temperature of the first high-pressure fuel pump 31 and the second high-pressure fuel pump 51 is equal to or higher than a predetermined first temperature THP1. Here, the electronic control unit 70 handles the coolant temperature THW detected by the coolant temperature sensor 84 as the pump ambient temperature THP of the first high-pressure fuel pump 31 and the second high-pressure fuel pump 51. Moreover, the first temperature THP1 is a temperature at which, when the stopped first high-pressure fuel pump 31 and the second high-pressure fuel pump 51 reach the first temperature THP1, fuel boils inside the pumps to generate vapor, for example, the first temperature THP1 is between 80 to 100°C. In a case where the pump ambient temperature THP is equal to or higher than the first temperature THP1 (YES in step S13), the electronic control unit 70 shifts the processing to step S16.

In step S16, the electronic control unit 70 turns ON the twin-drive mode request flag. Thereafter, the electronic control unit 70 temporarily ends the series of flag ON/flag OFF switching processes, and again performs the processing in step S11 after a predetermined control cycle. When the twin-drive mode request flag has been turned ON, the twin-drive mode is requested for the first high-pressure fuel pump 31 and the second high-pressure fuel pump 51, and the single-drive mode is prohibited.

In contrast, in a case where the pump ambient temperature THP is less than the first temperature THP1 (NO in step S13), the electronic control unit 70 shifts the processing to step S15.

The electronic control unit 70 determines whether or not the twin-drive mode request flag is ON as of the processing in step S15. In a case where the twin-drive mode request flag is ON (YES in step S15), the electronic control unit 70 shifts the processing to step S16. In step S16, the electronic control unit 70 either turns ON the twin-drive mode request flag or maintains it in the ON state. Thereafter, the electronic control unit 70 temporarily ends the series of flag ON/flag OFF switching processes, and again performs the processing in step S11 after a predetermined control cycle.

In contrast, in a case where the twin-drive mode request flag is OFF (NO in step S15), the electronic control unit 70 shifts the processing to step S17, and turns OFF the twin-drive mode request flag. Thereafter, the electronic control unit 70 temporarily ends the series of flag ON/flag OFF switching processes, and again performs the processing in step S11 after a predetermined control cycle.

Next, the switching determination process of the twin-drive mode and the single-drive mode by the electronic control unit 70 as a pump switching unit using the twin-drive mode request flag described above will be described. The switching determination process is repeatedly executed, in parallel with the flag ON/flag OFF switching process of the twin-drive mode request flag described above, in each predetermined control cycle after the internal combustion engine 10 is started and until the operation of the internal combustion engine 10 ends.

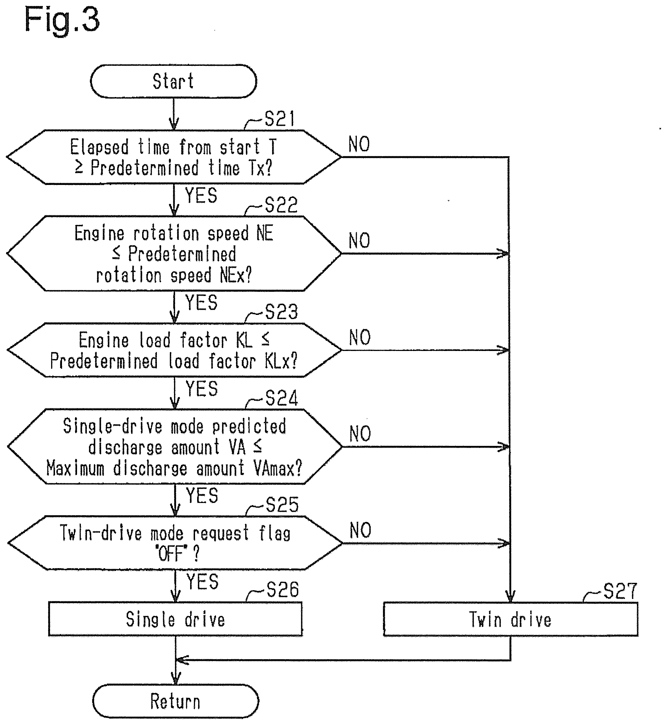

As shown in Fig. 3, when the switching determination process is executed, the electronic control unit 70 executes the processing in step S21. In step S21, the electronic control unit 70 determines whether or not the elapsed time T since the start of the internal combustion engine 10 is equal to or more than a predetermined time Tx that is determined beforehand. The predetermined time Tx is, for example, in the range of tens of seconds to several tens of seconds. Immediately after the internal combustion engine 10 starts, the operation of the internal combustion engine 10 is unstable, and a comparatively large amount of fuel is injected in order to reliably operate the internal combustion engine 10. That is, the required injection amount of the first cylinder injection valve 42 and the second cylinder injection valve 62 is large, and the load on the first high-pressure fuel pump 31 and the second high-pressure fuel pump 51 is also high. Through the processing in step S21, it is determined whether or not the load on the first high-pressure fuel pump 31 and the second high-pressure fuel pump 51 is high immediately after the start of the internal combustion engine 10. In a case where the elapsed time T is less than the predetermined time Tx (NO in step S21), the electronic control unit 70 shifts the processing to step S27. In contrast, in a case where the elapsed time T is equal to or longer than the predetermined time Tx (YES in step S21), the processing of the electronic control unit 70 shifts to step S22.

In step S22, the electronic control unit 70 determines whether or not the engine rotation speed NE is equal to or less than a predetermined rotation speed NEx. The engine rotation speed NE is calculated by the electronic control unit 70 based on the rotation angle CA detected by the crank angle sensor 85. The predetermined rotation speed NEx is determined based on the engine rotation speed NE when the vehicle has stopped and the load due to the auxiliary equipment is not high, and the predetermined rotation speed NEx is, for example, in the range of several hundreds of rpm to several thousands of hundreds of rpm. In a case where the engine rotation speed NE exceeds the predetermined rotation speed NEx (NO in step S22), the electronic control unit 70 shifts the processing to step S27. In contrast, in a case where the engine rotation speed NE is equal to or less than the predetermined rotation speed NEx (YES in step S22), the electronic control unit 70 shifts the processing to step S23.

In step S23, the electronic control unit 70 determines whether or not the engine load factor KL is equal to or less than a predetermined load factor KLx. Here, the electronic control unit 70 calculates the engine load factor KL in accordance with the throttle opening degree TA detected by the throttle sensor 83. Specifically, when the opening of the throttle valve is the smallest (when the valve is fully closed), the engine load factor KL is considered as zero%, and when the opening of the throttle valve is the greatest (when the valve is fully open), the engine load factor KL is considered as 100%. The predetermined load ratio KLx is, for example, 20 to 30%. In a case where the engine load factor KL exceeds the predetermined load factor KLx (NO in step S23), the electronic control unit 70 shifts the processing to step S27. In a case where the engine load factor KL is equal to or less than the predetermined load factor KLx (YES in step S23), the electronic control unit 70 shifts the processing to step S24.

The electronic control unit 70 calculates the required discharge amount per unit time of the first high-pressure fuel pump 31 or the second high-pressure fuel pump 51 in a case where the single-drive mode is tentatively performed as of the processing in step S24, as the predicted discharge amount VA during the single-drive mode. Also, the electronic control unit 70 determines whether or not the predicted discharge amount VA that has been calculated is equal to or less than the maximum discharge amount VAmax per unit time of the first high-pressure fuel pump 31 and the second high-pressure fuel pump 51.

As described above, the required discharge amount of the first high-pressure fuel pump 31 and the second high-pressure fuel pump 51 is calculated by PI control (feedback control) using the proportional term and integral term, and by the feedforward control using the feedforward term. Also, in contrast to the both the first high-pressure fuel pump 31 and the second high-pressure fuel pump 51 being driven at the time of the twin-drive mode, either one of the first high-pressure fuel pump 31 and the second high-pressure fuel pump 51 is driven at the time of the single-drive mode. That is, at the time of the twin-drive mode and at the time of the single-drive mode, a difference occurs in characteristics such as the rate of change in the actual fuel pressure FPH. Therefore, for example, at the time of the twin-drive mode and at the time of the single-drive mode, a difference is generated in the proportional term gain, the integral term gain, and the feedforward term gain. Specifically, for example, the feedforward term gain during the single-drive mode may be set larger than the feedforward term gain during the twin-drive mode to a value which is double or less. Further, particularly with regard to the integral term, in order to ensure that the integral term during the single-drive mode is updated based on the deviation between the actual fuel pressure FPH and the target fuel pressure during the twin-drive mode, and to prevent the reverse from occurring, different individual integral terms may be used during the twin-drive mode and during the single-drive mode. In step S24, based on the proportional term gain, the integral term, the integral term gain, and the feedforward term gain used during the single-drive mode, the predicted discharge amount VA during the single-drive mode is calculated.

In a case where the predicted discharge amount VA exceeds the maximum discharge amount VAmax (NO in step S24), the electronic control unit 70 shifts the processing to step S27. In contrast, in a case where the predicted discharge amount VA is equal to or less than the maximum discharge amount VAmax (YES in step S24), the electronic control unit 70 shifts the processing to step S25.

In step S25, the electronic control unit 70 determines whether or not the twin-drive mode request flag determined in the flag ON/flag OFF switching process of the twin-drive mode request flag in step S11 to step S17 is OFF. In a case where the twin-drive mode request flag is ON (NO in step S25), the electronic control unit 70 shifts the processing to step S27. In contrast, in a case where the twin-drive mode request flag is OFF (YES in step S25), the electronic control unit 70 shifts the processing to step S26.

In step S26, the electronic control unit 70 determines the single-drive mode in which one of the first high-pressure fuel pump 31 and the second high-pressure fuel pump 51 is driven and the other one is stopped, as the drive mode of the first high-pressure fuel pump 31 and the second high-pressure fuel pump 51. That is, when the first high-pressure fuel pump 31 and the second high-pressure fuel pump 51 have been the twin-drive mode so far, the processing switches to the single-drive mode by the high-pressure fuel pump different from the previous single-drive mode high-pressure fuel pump. Further, when a high-pressure fuel pump has already performed the single-drive mode so far, then the single-drive mode by the same high-pressure fuel pump continues. Thereafter, the electronic control unit 70 temporarily ends the series of switching determination processes, and again performs the processing in step S21 after a predetermined control cycle.

In contrast, as described above, when "NO" is determined in any one of step S21 through step S25, the electronic control unit 70 shifts the processing to step S27. In step S27, the electronic control unit 70 determines the twin-drive mode in which both the first high-pressure fuel pump 31 and the second high-pressure fuel pump 51 are driven, as the drive mode of the first high-pressure fuel pump 31 and the second high-pressure fuel pump 51. That is, when the first high-pressure fuel pump 31 or the second high-pressure fuel pump 51 has been the single-drive mode so far, the processing switches to the twin-drive mode. Further, when the first high-pressure fuel pump 31 and the second high-pressure fuel pump 51 have already performed the twin-drive mode so far, then the twin-drive mode is continued. Thereafter, the electronic control unit 70 temporarily ends the series of switching determination processes, and again performs the processing in step S21 after a predetermined control cycle.

The operation and advantages of the present embodiment will now be described.

In the present embodiment, the single-drive mode is executed under a condition when the load on the internal combustion engine 10 is low, such as when the engine rotation speed NE is low (YES in step S22 shown in Fig. 3), and the engine load factor KL is low (YES in step S23). Thus, at the time of the single-drive mode, although the load on the internal combustion engine 10 is low, if the internal combustion engine 10 is running, the temperature inside the engine compartment including the surroundings of the first high-pressure fuel pump 31 and the second high-pressure fuel pump 51 accordingly becomes high.

Here, it is assumed that the single-drive mode in which the first high-pressure fuel pump 31 is driven and the second high-pressure fuel pump 51 is stopped is executed. In this case, fuel from the fuel tank 11 is newly supplied to the first high-pressure fuel pump 31 via the feed pump 12. Since the first high-pressure fuel pump 31 is cooled by the fuel that is newly supplied, neither does the temperature of the first high-pressure fuel pump 31 become excessively high, nor does the fuel become excessively heated by the heat from the first high-pressure fuel pump 31. In contrast, since the second high-pressure fuel pump 51 has been stopped, new fuel is not supplied to the second high-pressure fuel pump 51. Therefore, the second high-pressure fuel pump 51 is not cooled by the fuel that is newly supplied, and the temperature of the second high-pressure fuel pump 51 increases in accordance with the ambient temperature. Assuming that the temperature of the second high-pressure fuel pump 51 that has been stopped becomes excessively high, the fuel inside the second high-pressure fuel pump 51 boils and vapor may be generated. Thus, when vapor is generated inside the second high-pressure fuel pump 51, and the second high-pressure fuel pump 51 is again driven after being switched from the single-drive mode to twin-drive mode, the vapor may prevent the compression of fuel inside the second high-pressure fuel pump 51, due to which the second high-pressure fuel pump 51 may not be able to properly discharge the fuel.

In the present embodiment, under a condition when the single-drive mode can be executed, such as when the state is idle (YES in step S11 shown in Fig. 2) and when the vehicle speed SP is low (YES in step S12), it is determined whether or not the pump ambient temperature THP (the coolant temperature THW) is equal to or higher than the first temperature THP1. When the pump ambient temperature THP is equal to or higher than the first temperature THP1, the twin-drive mode request flag is turned ON and the execution of the single-drive mode is prohibited. That is, upon being switched from the single-drive mode to twin-drive mode, the second high-pressure fuel pump 51 that had been stopped is again driven. Therefore, due to the re-supply of new fuel from the fuel tank 11 to the second high-pressure fuel pump 51, the second high-pressure fuel pump 51 is cooled by the supplied fuel. As a result, the second high-pressure fuel pump 51 does not become excessively hot, and thus, the generation of vapor is limited.

When the pump ambient temperature THP remains close to the first temperature THP1, then in a relatively short period of time, the pump ambient temperature THP repeatedly rises above or falls below the first temperature THP1. Under this condition, when the twin-drive mode request flag is turned ON in a case where the pump ambient temperature THP is equal to or higher than the first temperature THP1, and the twin-drive mode request flag is turned OFF in a case where the pump ambient temperature THP is less than the first temperature THP1, the twin-drive mode and the single-drive mode can be switched many times in a short period of time. In this case, the actual fuel pressure FPH, which is the fuel pressure inside the first high-pressure delivery pipe 41 and the second high-pressure delivery pipe 61, does not stabilize, and it takes time for the actual fuel pressure FPH to reach the target fuel pressure. Also, the sound that is generated each time the first high-pressure fuel pump 31 and the second high-pressure fuel pump 51 repeats the driving or stopping process is considered as noise by the occupants of the vehicle.

In this respect, in the above embodiment, in a case where the twin-drive mode request flag is ON (YES in step S15 shown in Fig. 2), in other words, in a case where switching from the single-drive mode to the twin-drive mode due to the pump ambient temperature THP being equal to or higher than the first temperature THP1, even when the pump ambient temperature THP falls below the first temperature THP1 (NO in step S13), the twin-drive mode request flag is not turned OFF, switching to the single-drive mode does not occur, and the twin-drive mode is maintained. Thus, the switching between the single-drive mode and the twin-drive mode does not occur frequently.

In the present embodiment, as described above, when the load on the internal combustion engine 10 is small, the single-drive mode can be executed. This is because when the load on the internal combustion engine 10 is small, the amount of fuel injected from the first cylinder injection valve 42 and the second cylinder injection valve 62 is small, and the probability of a timely supply of fuel even from only either one of the first high-pressure fuel pump 31 and the second high-pressure fuel pump 51 is high.

However, for example, in a case where the actual fuel pressure FPH of the first high-pressure delivery pipe 41 does not reach the target fuel pressure, the required discharge amount that is required by the first high-pressure fuel pump 31 and the second high-pressure fuel pump 51 based on the PI control may increase. When switching from the twin-drive mode to the single-drive mode occurs in such a situation, an excessive load that is equal to or more than the limit is exerted on the high-pressure fuel pump that is driven, and it takes a long time for the actual fuel pressure FPH to reach the target fuel pressure. Therefore, in the embodiment described above, as one of the conditions for switching from the twin-drive mode to the single-drive mode, a condition is adopted that the predicted discharge amount VA in a case where the single-drive mode is assumed to be equal to or less than the maximum discharge amount VAmax per unit time of the first high-pressure fuel pump 31 and the second high-pressure fuel pump 51. Thus, the above problem is less likely to occur.

The present embodiment may be modified as follows. The present embodiment and the following modifications can be combined as long as the combined modifications remain technically consistent with each other.

In the embodiment described above, the technology related to switching of the twin-drive mode and the single-drive mode is applied to the V-6 internal combustion engine 10, but the technology may also be applied to a V engine 10 having another number of cylinders, such as a V-8 internal combustion engine 10. Further, when two high-pressure fuel pumps are provided, the technology related to switching of the twin-drive mode and the single-drive mode that is described above can be applied to an internal combustion engine other than the V engine 10.

The first port injection valve 22, the second port injection valve 26, and the configuration associated thereto may be omitted.

When two feed pumps 12 are provided as fuel pumps for supplying fuel to the first low-pressure delivery pipe 21 and the second low-pressure delivery pipe 25, the technology related to switching of the twin-drive mode and the single-drive mode that is described above can also be applied to the two feed pumps 12.

In the embodiment described above, the high-pressure side fuel pressure sensor 43 is provided in the first high-pressure delivery pipe 41, but the high-pressure side fuel pressure sensor 43 may be provided in the second high-pressure delivery pipe 61 and the connecting passage 66. Also, since the first high-pressure delivery pipe 41 and the second high-pressure delivery pipe 61 are connected by the connecting passage 66, the fuel pressure inside both the first high-pressure delivery pipe 41 and the second high-pressure delivery pipe 61 is the same. However, depending on the arrangement and shape of the first high-pressure delivery pipe 41 and the second high-pressure delivery pipe 61, for example, it may take time for a change in the fuel pressure inside the first high-pressure delivery pipe 41 to spread to the second high-pressure delivery pipe 61. Therefore, a fuel pressure sensor may be provided in both the first high-pressure delivery pipe 41 and the second high-pressure delivery pipe 61, and the average value of the fuel pressure detected by the fuel pressure sensors may be considered as the actual fuel pressure FPH.

In the embodiment described above, the return pipe 64 from the second high-pressure delivery pipe 61 to the fuel tank 11 is provided, but the form of returning fuel to the fuel tank 11 is not limited hereto. A so-called returnless pipe structure may be adopted.

When stopping the first high-pressure fuel pump 31, the electromagnetic spill valve 36 may be controlled in the closed state. Even in this case, since the fuel is no longer supplied to the pressurizing chamber R1 of the first high-pressure fuel pump 31, the fuel pressure inside the pressurizing chamber R1 does not rise even when the plunger 33 performs a reciprocating movement.

In the embodiment described above, the electronic control unit 70, which is a processing circuit, functions as a fuel pump controller, but the configuration is not limited thereto. The fuel pump controller, like the ASIC, may be a processing circuit in which chips that execute one or more specific processes are combined together.

With regard to the switching determination process of the twin-drive mode and the single-drive mode, the conditions for switching to the single-drive mode are not limited to those illustrated in the embodiment described above (step S21 to step S24), as long as the condition that the twin-drive mode request flag is OFF (step S25 shown in Fig. 3) is present. Any of the conditions illustrated in the above-described embodiment may be omitted, and another condition may be added. For example, an exhaust purifying catalyst may be provided in the exhaust passage of the internal combustion engine 10. Also, in order to warm up the exhaust purifying catalyst by increasing the temperature of the exhaust, the required injection amount of the first cylinder injection valve 42 and the second cylinder injection valve 62 may be increased. That such a warm-up process of an exhaust purifying catalyst is not executed may be considered as one of the conditions for switching to the single-drive mode.

The high-pressure fuel pump to be stopped during the single-drive mode may be fixed to either one of the first high-pressure fuel pump 31 and the second high-pressure fuel pump 51.

In the embodiment described above, the coolant temperature THW at the outlet part of the water jacket is considered as the pump ambient temperature THP, but the configuration is not limited thereto. For example, a temperature sensor may be provided adjacent to the first high-pressure fuel pump 31 and the second high-pressure fuel pump 51, and the detection value of the temperature sensor may be considered as the pump ambient temperature THP. Further, based on a plurality of temperature sensors in the engine compartment, the average value of the temperature sensors may be handled as the pump ambient temperature THP.

The first temperature THP1 is not limited to the range illustrated in the embodiment described above. Where to detect the pump ambient temperature THP, and what type of fuel is used as the fuel may be determined in consideration of the structure of the entire internal combustion engine 10, or the like.

Either one or both of the step S11 and step S12 in the flag ON/flag OFF switching process of the twin-drive mode request flag may be omitted. In the flag ON/flag OFF switching process of the twin-drive mode request flag, it suffices that flag ON/flag OFF may be switched based on the determination on whether or not the pump ambient temperature THP is equal to or higher than the first temperature (step S13).

In the flag ON/flag OFF switching process of the twin-drive mode request flag, after the pump ambient temperature THP becomes equal to or higher than the first temperature THP1 and the twin-drive mode request flag is turned ON, the twin-drive mode request flag may be turned OFF when the pump ambient temperature THP falls below the second temperature that is specified as a temperature lower than the first temperature THP1.

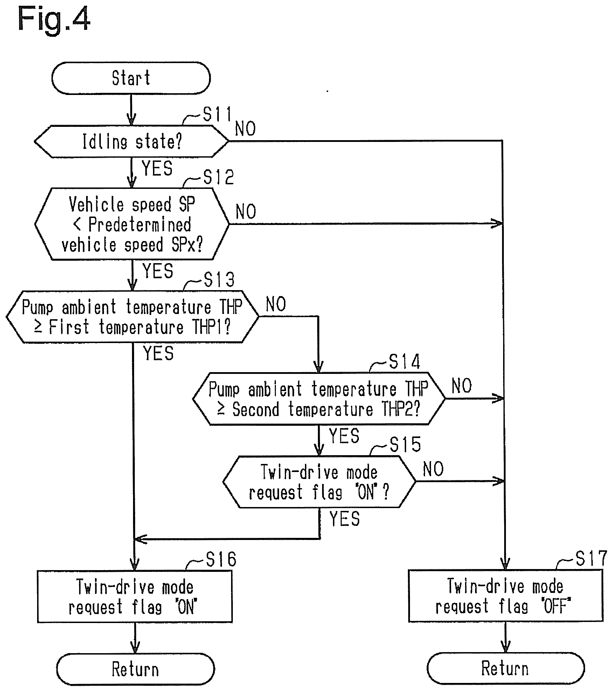

Specifically, as shown in Fig. 4, in a case where the pump ambient temperature THP is less than the first temperature THP1 (NO in step S13), the electronic control unit 70 shifts the processing to step S14. In step S14, the electronic control unit 70 determines whether or not the pump ambient temperature THP is equal to or higher than a predetermined second temperature THP2. In a case where the pump ambient temperature THP is less than the second temperature THP2 (NO in step S14), the electronic control unit 70 shifts the processing to step S17, and turns OFF the twin-drive mode request flag. Thereafter, the electronic control unit 70 temporarily ends the series of flag ON/flag OFF switching processes, and again performs the processing in step S11 after a predetermined control cycle.

In contrast, in a case where the pump ambient temperature THP is equal to or higher than the second temperature THP2 (YES in step S14), the electronic control unit 70 shifts the processing to step S15. The electronic control unit 70 determines whether or not the twin-drive mode request flag is ON as of the processing in step S15. In a case where the twin-drive mode request flag is ON (YES in step S15), the electronic control unit 70 shifts the processing to step S16. In step S16, the electronic control unit 70 either turns ON the twin-drive mode request flag or maintains it in the ON state. Thereafter, the electronic control unit 70 temporarily ends the series of flag ON/flag OFF switching processes, and again performs the processing in step S11 after a predetermined control cycle.

According to the modification described above, in a state where the twin-drive mode is performed, during the time period from when the pump ambient temperature THP falls below the first temperature THP1 (NO in step S13) until when the pump ambient temperature THP falls below the second temperature THP2 (NO in step S14), the twin-drive mode request flag does not turn OFF, and the single-drive mode is prohibited. Therefore, the switching between the single-drive mode and the twin-drive mode does not occur frequently. In Fig. 4, the same reference numerals are assigned to the processing that is the same in each step in Fig. 2.

In the above modification, the second temperature THP2 can be set to any value as long as the second temperature THP2 is lower than the first temperature THP. The larger the difference between the second temperature THP2 and the first temperature THP1, the longer becomes the predetermined period until the single-drive mode is allowed again after switching from the single-drive mode to the twin-drive mode.

In particular, in a case where a temperature that is around the atmospheric temperature (for example, 0 to 30°C) is adopted as the second temperature THP2, it is unlikely that once the coolant temperature THW of the internal combustion engine 10 (the pump ambient temperature THP) becomes equal to or higher than the first temperature THP1 that is higher than the second temperature THP2, the coolant temperature THW will become lower than the second temperature THP2 (0 to 30°C) unless the internal combustion engine 10 is stopped. In such a temperature setting, when switching from the single-drive mode to the twin-drive mode by turning ON the twin-drive mode request flag, switching back again to the single-drive mode almost never occurs unless the internal combustion engine 10 is stopped. Therefore, problems associated with an increase in the switching frequency between the single-drive mode and the twin-drive mode almost never occur.

Instead of or in addition to the processing of step S15 in the flag ON/flag OFF switching process of the twin-drive mode request flag, a process for prohibiting the switching to the single-drive mode may be adopted for a certain period after switching from the single-drive mode to the twin-drive mode. For example, when the processing proceeds to step S26 in a state where the twin-drive mode is performed, and a switch to the single-drive mode occurs, the electronic control unit 70 starts measuring the time. Thereafter, in a case where the measured time is less than a specified time that has been determined beforehand, the electronic control unit 70 shifts the processing to step S16, turns ON the twin-drive mode request flag, and prohibits switching to the single-drive mode. In contrast, in a case where the measured time is equal to or more than the specified time, that is, in a case where the predetermined time has elapsed, the electronic control unit 70 shifts the processing to step S17, turns OFF the twin-drive mode request flag, and allows for the single-drive mode. Even in such a process, after switching from the single-drive mode to the twin-drive mode, the single-drive mode is prohibited for the time period until the specified time has elapsed. Therefore, the switching between the single-drive mode and the twin-drive mode does not occur frequently.

Step S15 and the processing of the modification described above (step S14) may be omitted, and the twin-drive mode request flag may be turned OFF when the pump ambient temperature THP is less than the first temperature THP1. For example, the processing concerning the comparison between the pump ambient temperature THP and the second temperature THP2 may be omitted as long as the actual fuel pressure FPH can be properly controlled even when the proportional term and the integral term used in the feedback control, and the feedforward term used in the feedforward control, and the gains thereof are properly switched, and switching is performed between the twin-drive mode and the single-drive mode.

In the embodiment described above, the predicted discharge amount VA in case where the single-drive mode is performed is compared with the maximum discharge amount VAmax per unit time of the first high-pressure fuel pump 31 and the second high-pressure fuel pump 51, however, the comparison target of the predicted discharge amount VA can be changed as long as the value is equal to or less than the maximum discharge amount VAmax. For example, the predicted ejection amount VA may be compared with a predetermined discharge amount that is defined as 90% of the maximum discharge amount VAmax. By comparing with a predetermined discharge amount that is lower than the maximum discharge amount VAmax, it is possible to provide a margin with respect to the hardware limit of the first high-pressure fuel pump 31 and the second high-pressure fuel pump 51.

In the embodiment described above, the high-pressure fuel pump to be stopped may be switched when the pump ambient temperature THP becomes equal to or higher than the first temperature THP1 during the single-drive mode. Specifically, when the pump ambient temperature THP becomes equal to or higher than the first temperature THP1 during the single-drive mode in which the first high-pressure fuel pump 31 is driven and the second high-pressure fuel pump 51 is stopped, the first high-pressure fuel pump 31 may be stopped, and the second high-pressure fuel pump 51 may be driven. Even when the high pressure fuel pump to be stopped is thus switched, the probability of the pump ambient temperature THP remaining at or higher than the first temperature THP1 is high, and there is a possibility that the high-pressure fuel pump that has been stopped reaches a high temperature. Therefore, after a certain period of time elapses since switching the high-pressure fuel pump to be stopped, it is preferable to switch again the high-pressure fuel pump to be stopped, and perform switching from the single-drive mode to the twin-drive mode.

## Claims

1. A fuel pump controller (70) adapted for an internal combustion engine (10), wherein
the internal combustion engine (10) includes
a first high-pressure fuel pump (31) configured to discharge fuel by increasing pressure,
a first fuel passage (37, 41), through which the fuel discharged by the first high-pressure fuel pump (31) flows,
a first fuel injection valve (42) configured to inject the fuel supplied from the first fuel passage (37, 41),
a second high-pressure fuel pump (51) configured to discharge fuel by increasing pressure,
a second fuel passage (57, 61), through which the fuel discharged by the second high-pressure fuel pump (51) flows,
a second fuel injection valve (62) configured to inject the fuel supplied from the second fuel passage (57, 61), and
a connecting passage (66), which connects the first fuel passage (37, 41) and the second fuel passage (57, 61) to each other, such that the fuel inside the first fuel pipe (37, 41), and the fuel inside the second fuel pipe (57, 61) can flow into each other via the connecting passage (66) so that the actual fuel pressure (FPH) inside the first fuel pipe (37, 41), the second fuel pipe (57, 61), and the connecting passage (66) is almost the same,
**characterized in that**
the internal combustion engine (10) further includes:
a temperature sensor (84) configured to detect an ambient temperature of the first high-pressure fuel pump (31) or the second high-pressure fuel pump (51), wherein
the fuel pump controller (70) comprises a pump switching unit (70) configured to switch a drive mode of the first high-pressure fuel pump (31) and the second high-pressure fuel pump (51), in accordance with an operating state of the internal combustion engine (10), either to a twin-drive mode, in which both the first high-pressure fuel pump (31) and the second high-pressure fuel pump (51) are driven, or to a single-drive mode, in which either one of the first high-pressure fuel pump (31) and the second high-pressure fuel pump (51) is driven, and
the pump switching unit (70) is configured to switch to the twin-drive mode in a state that the single-drive mode is performed in a case where the ambient temperature detected by the temperature sensor (84) becomes equal to or higher than a first temperature at which the fuel inside one of the first high-pressure fuel pump (31) and the second high-pressure fuel pump (51) that has been stopped boils to generate vapor.

2. The fuel pump controller (70) according to claim 1, wherein the pump switching unit (70) is configured to maintain the twin-drive mode even when the ambient temperature detected by the temperature sensor (84) falls below the first temperature after switching from the single-drive mode to the twin-drive mode as a result of the ambient temperature detected by the temperature sensor (84) being equal to or higher than the first temperature.

3. The fuel pump controller (70) according to claim 1 or 2, wherein the pump switching unit (70) is configured to prohibit switching from the twin-drive mode to the single-drive mode until a predetermined time period has elapsed since switching from the single-drive mode to the twin-drive mode.

4. The fuel pump controller (70) according to any one of claims 1 to 3, wherein
the internal combustion engine (10) includes a fuel pressure sensor (23, 43) configured to detect a fuel pressure of any one of the first fuel passage (37, 41), the second fuel passage (57, 61), and the connecting passage (66),
the fuel pump controller (70) comprises a pump control unit (70) configured to calculate a required discharge amount per unit time of the first high-pressure fuel pump (31) and the second high-pressure fuel pump (51) by a feedback control based on a deviation between an actual fuel pressure detected by the fuel pressure sensor (23, 43) and a target fuel pressure, and
the pump switching unit (70) is configured to switch the twin-drive mode to the single-drive mode when conditions are met, one of the conditions being that the required discharge amount when it is assumed that switching from the twin-drive mode to the single-drive mode is performed is equal to or less than the maximum discharge amount per unit of time of the first high-pressure fuel pump (31) and the second high-pressure fuel pump (51).

5. A control method of a fuel pump adapted for an internal combustion engine (10), wherein
the internal combustion engine (10) includes
a first high-pressure fuel pump (31) configured to discharge fuel by increasing pressure,
a first fuel passage (37, 41), through which the fuel discharged by the first high-pressure fuel pump (31) flows,
a first fuel injection valve (42) configured to inject the fuel supplied from the first fuel passage (37, 41),
a second high-pressure fuel pump (51) configured to discharge fuel by increasing pressure,
a second fuel passage (57, 61), through which the fuel discharged by the second high-pressure fuel pump (51) flows,
a second fuel injection valve (62) configured to inject the fuel supplied from the second fuel passage (57, 61), and
a connecting passage (66), which connects the first fuel passage (37, 41) and the second fuel passage (57, 61) to each other, such that the fuel inside the first fuel pipe (37, 41), and the fuel inside the second fuel pipe (57, 61) can flow into each other via the connecting passage (66) so that the actual fuel pressure (FPH) inside the first fuel pipe (37, 41), the second fuel pipe (57, 61), and the connecting passage (66) is almost the same,
**characterized in that**
the internal combustion engine (10) further includes:
a temperature sensor (84) configured to detect an ambient temperature of the first high-pressure fuel pump (31) or the second high-pressure fuel pump (51), wherein
the control method comprises:
switching a drive mode of the first high-pressure fuel pump (31) and the second high-pressure fuel pump (51), in accordance with an operating state of the internal combustion engine (10), either to a twin-drive mode, in which both the first high-pressure fuel pump (31) and the second high-pressure fuel pump (51) are driven, or to a single-drive mode, in which either one of the first high-pressure fuel pump (31) and the second high-pressure fuel pump (51) is driven; and
switching to the twin-drive mode in a state that the single-drive mode is performed in a case where the ambient temperature detected by the temperature sensor (84) becomes equal to or higher than a first temperature at which the fuel inside one of the first high-pressure fuel pump (31) and the second high-pressure fuel pump (51) that has been stopped boils to generate vapor.

## Patentansprüche

1. Kraftstoffpumpensteuergerät (70), das für einen Verbrennungsmotor (10) ausgelegt ist, wobei
der Verbrennungsmotor (10) beinhaltet
eine erste Hochdruckkraftstoffpumpe (31), die dazu ausgestaltet ist, Kraftstoff durch Erhöhen eines Drucks abzugeben,
einen ersten Kraftstoffdurchgang (37, 41), durch den der von der ersten Hochdruckkraftstoffpumpe (31) abgegebene Kraftstoff strömt,
ein erstes Kraftstoffeinspritzventil (42), das dazu ausgestaltet ist, den von dem ersten Kraftstoffdurchgang (37, 41) zugeführten Kraftstoff einzuspritzen,
eine zweite Hochdruckkraftstoffpumpe (51), die dazu ausgestaltet ist, Kraftstoff durch Erhöhen eines Drucks abzugeben,
einen zweiten Kraftstoffdurchgang (57, 61), durch den der von der zweiten Hochdruckkraftstoffpumpe (51) abgegebene Kraftstoff strömt,
ein zweites Kraftstoffeinspritzventil (62), das dazu ausgestaltet ist, den von dem zweiten Kraftstoffdurchgang (57, 61) zugeführten Kraftstoff einzuspritzen, und
einen Verbindungsdurchgang (66), der den ersten Kraftstoffdurchgang (37, 41) und den zweiten Kraftstoffdurchgang (57, 61) derart miteinander verbindet, dass der Kraftstoff in der ersten Kraftstoffleitung (37, 41) und der Kraftstoff in der zweiten Kraftstoffleitung (57, 61) über den Verbindungsdurchgang (66) ineinander strömen können, so dass der tatsächliche Kraftstoffdruck (FPH) in der ersten Kraftstoffleitung (37, 41), der zweiten Kraftstoffleitung (57, 61) und dem Verbindungsdurchgang (66) fast der gleiche ist,
**dadurch gekennzeichnet, dass**
der Verbrennungsmotor (10) ferner beinhaltet:
einen Temperatursensor (84), der dazu ausgestaltet ist, eine Umgebungstemperatur der ersten Hochdruckkraftstoffpumpe (31) oder der zweiten Hochdruckkraftstoffpumpe (51) zu erfassen, wobei
das Kraftstoffpumpensteuergerät (70) eine Pumpenumschalteinheit (70) umfasst, die dazu ausgestaltet ist, einen Antriebsmodus der ersten Hochdruckkraftstoffpumpe (31) und der zweiten Hochdruckkraftstoffpumpe (51) gemäß einem Betriebszustand des Verbrennungsmotors (10) entweder auf einen Doppelantriebsmodus, in dem sowohl die erste Hochdruckkraftstoffpumpe (31) als auch die zweite Hochdruckkraftstoffpumpe (51) angetrieben werden, oder auf einen Einzelantriebsmodus, in dem irgendeine von der ersten Hochdruckkraftstoffpumpe (31) und der zweiten Hochdruckkraftstoffpumpe (51) angetrieben wird, umzuschalten und
die Pumpenumschalteinheit (70) dazu ausgestaltet ist, auf den Doppelantriebsmodus in einem Zustand umzuschalten, in dem der Einzelantriebsmodus in einem Fall durchgeführt wird, in dem die von dem Temperatursensor (84) erfasste Umgebungstemperatur gleich oder höher als eine erste Temperatur wird, bei welcher der Kraftstoff in einer von der ersten Hochdruckkraftstoffpumpe (31) und der zweiten Hochdruckkraftstoffpumpe (51), die gestoppt wurde, kocht, um Dampf zu erzeugen.

2. Kraftstoffpumpensteuergerät (70) nach Anspruch 1, wobei die Pumpenumschalteinheit (70) dazu ausgestaltet ist, den Doppelantriebsmodus aufrechtzuerhalten, selbst wenn die von dem Temperatursensor (84) erfasste Umgebungstemperatur unter die erste Temperatur fällt, nachdem von dem Einzelantriebsmodus auf den Doppelantriebsmodus aufgrund dessen umgeschaltet wurde, dass die von dem Temperatursensor (84) erfasste Umgebungstemperatur gleich oder höher als die erste Temperatur ist.

3. Kraftstoffpumpensteuergerät (70) nach Anspruch 1 oder 2, wobei die Pumpenumschalteinheit (70) dazu ausgestaltet ist, das Umschalten von dem Doppelantriebsmodus auf den Einzelantriebsmodus zu verhindern, bis eine vorbestimmte Zeitdauer seit dem Umschalten von dem Einzelantriebsmodus auf den Doppelantriebsmodus verstrichen ist.

4. Kraftstoffpumpensteuergerät (70) nach einem der Ansprüche 1 bis 3, wobei
der Verbrennungsmotor (10) einen Kraftstoffdrucksensor (23, 43) beinhaltet, der dazu ausgestaltet ist, einen Kraftstoffdruck von einem beliebigen von dem ersten Kraftstoffdurchgang (37, 41), dem zweiten Kraftstoffdurchgang (57, 61) und dem Verbindungsdurchgang (66) zu erfassen,
das Kraftstoffpumpensteuergerät (70) eine Pumpensteuereinheit (70) umfasst, die dazu ausgestaltet ist, eine erforderliche Abgabemenge pro Zeiteinheit der ersten Hochdruckkraftstoffpumpe (31) und der zweiten Hochdruckkraftstoffpumpe (51) durch eine Rückkopplungssteuerung basierend auf einer Abweichung zwischen einem von dem Kraftstoffdrucksensor (23, 43) erfassten tatsächlichen Kraftstoffdruck und einem Zielkraftstoffdruck zu berechnen, und
die Pumpenumschalteinheit (70) dazu ausgestaltet ist, den Doppelantriebsmodus auf den Einzelantriebsmodus umzuschalten, wenn Bedingungen erfüllt sind, wobei eine der Bedingungen ist, dass die erforderliche Abgabemenge unter der Annahme, dass ein Umschalten von dem Doppelantriebsmodus auf den Einzelantriebsmodus durchgeführt wird, gleich oder geringer als die maximale Abgabemenge pro Zeiteinheit der ersten Hochdruckkraftstoffpumpe (31) und der zweiten Hochdruckkraftstoffpumpe (51) ist.

5. Steuerverfahren einer Kraftstoffpumpe, das für einen Verbrennungsmotor (10) geeignet ist, wobei
der Verbrennungsmotor (10) beinhaltet
eine erste Hochdruckkraftstoffpumpe (31), die dazu ausgestaltet ist, Kraftstoff durch Erhöhen eines Drucks abzugeben,
einen ersten Kraftstoffdurchgang (37, 41), durch den der von der ersten Hochdruckkraftstoffpumpe (31) abgegebene Kraftstoff strömt,
ein erstes Kraftstoffeinspritzventil (42), das dazu ausgestaltet ist, den von dem ersten Kraftstoffdurchgang (37, 41) zugeführten Kraftstoff einzuspritzen,
eine zweite Hochdruckkraftstoffpumpe (51), die dazu ausgestaltet ist, Kraftstoff durch Erhöhen eines Drucks abzugeben,
einen zweiten Kraftstoffdurchgang (57, 61), durch den der von der zweiten Hochdruckkraftstoffpumpe (51) abgegebene Kraftstoff strömt,
ein zweites Kraftstoffeinspritzventil (62), das dazu ausgestaltet ist, den von dem zweiten Kraftstoffdurchgang (57, 61) zugeführten Kraftstoff einzuspritzen, und
einen Verbindungsdurchgang (66), der den ersten Kraftstoffdurchgang (37, 41) und den zweiten Kraftstoffdurchgang (57, 61) derart miteinander verbindet, dass der Kraftstoff in der ersten Kraftstoffleitung (37, 41) und der Kraftstoff in der zweiten Kraftstoffleitung (57, 61) über den Verbindungsdurchgang (66) ineinander strömen können, so dass der tatsächliche Kraftstoffdruck (FPH) in der ersten Kraftstoffleitung (37, 41), der zweiten Kraftstoffleitung (57, 61) und dem Verbindungsdurchgang (66) fast der gleiche ist,
**dadurch gekennzeichnet, dass**
der Verbrennungsmotor (10) ferner beinhaltet:
einen Temperatursensor (84), der dazu ausgestaltet ist, eine Umgebungstemperatur der ersten Hochdruckkraftstoffpumpe (31) oder der zweiten Hochdruckkraftstoffpumpe (51) zu erfassen, wobei
das Steuerverfahren umfasst:
Umschalten eines Antriebsmodus der ersten Hochdruckkraftstoffpumpe (31) und der zweiten Hochdruckkraftstoffpumpe (51) gemäß einem Betriebszustand des Verbrennungsmotors (10) entweder auf einen Doppelantriebsmodus, in dem sowohl die erste Hochdruckkraftstoffpumpe (31) als auch die zweite Hochdruckkraftstoffpumpe (51) angetrieben werden, oder auf einen Einzelantriebsmodus, in dem irgendeine von der ersten Hochdruckkraftstoffpumpe (31) und der zweiten Hochdruckkraftstoffpumpe (51) angetrieben wird, umzuschalten und
Umschalten auf den Doppelantriebsmodus in einem Zustand, in dem der Einzelantriebsmodus in einem Fall durchgeführt wird, in dem die von dem Temperatursensor (84) erfasste Umgebungstemperatur gleich oder höher als eine erste Temperatur wird, bei welcher der Kraftstoff in einer von der ersten Hochdruckkraftstoffpumpe (31) und der zweiten Hochdruckkraftstoffpumpe (51), die gestoppt wurde, kocht, um Dampf zu erzeugen.

## Revendications

1. Dispositif de commande de pompe à carburant (70) prévu pour un moteur à combustion interne (10), dans lequel
le moteur à combustion interne (10) comprend
une première pompe à carburant à haute pression (31) configurée pour refouler du carburant en augmentant la pression,
un premier passage de carburant (37, 41), à travers lequel s'écoule le carburant refoulé par la première pompe à carburant à haute pression (31),
une première soupape d'injection de carburant (42) configurée pour injecter le carburant délivré à partir du premier passage de carburant (37, 41),
une deuxième pompe à carburant à haute pression (51) configurée pour refouler du carburant en augmentant la pression,
un deuxième passage de carburant (57, 61), à travers lequel s'écoule le carburant refoulé par la deuxième pompe à carburant à haute pression (51),
une deuxième soupape d'injection de carburant (62) configurée pour injecter le carburant délivré à partir du deuxième passage de carburant (57, 61), et
un passage de raccordement (66), qui relie le premier passage de carburant (37, 41) et le deuxième passage de carburant (57, 61) l'un à l'autre, de telle sorte que le carburant à l'intérieur du premier tuyau de carburant (37, 41), et le carburant à l'intérieur du deuxième tuyau de carburant (57, 61) peuvent s'écouler l'un dans l'autre par l'intermédiaire du passage de raccordement (66) de telle sorte que la pression de carburant réelle (FPH) à l'intérieur du premier tuyau de carburant (37, 41), du deuxième tuyau de carburant (57, 61), et du passage de raccordement (66) est pratiquement la même,
**caractérisé en ce que**
le moteur à combustion interne (10) comprend en outre :
un capteur de température (84) configuré pour détecter une température ambiante de la première pompe à carburant à haute pression (31) ou de la deuxième pompe à carburant à haute pression (51),
le dispositif de commande de pompe à carburant (70) comprenant une unité de commutation de pompe (70) configurée pour commuter un mode d'entraînement de la première pompe à carburant à haute pression (31) et de la deuxième pompe à carburant à haute pression (51), en fonction d'un état de fonctionnement du moteur à combustion interne (10), vers un mode à double entraînement, dans lequel la première pompe à carburant à haute pression (31) et la deuxième pompe à carburant à haute pression (51) sont toutes les deux entraînées, ou bien vers un mode à entraînement unique, dans lequel l'une ou l'autre de la première pompe à carburant à haute pression (31) et de la deuxième pompe à carburant à haute pression (51) est entraînée, et
l'unité de commutation de pompe (70) est configurée pour commuter vers le mode à double entraînement dans un état où le mode à entraînement unique est réalisé dans un cas où la température ambiante détectée par le capteur de température (84) devient égale ou supérieure à une première température à laquelle le carburant à l'intérieur d'une de la première pompe à carburant à haute pression (31) et de la deuxième pompe à carburant à haute pression (51) qui a été arrêtée bout pour générer de la vapeur.

2. Dispositif de commande de pompe à carburant (70) selon la revendication 1, dans lequel l'unité de commutation de pompe (70) est configurée pour maintenir le mode à double entraînement même lorsque la température ambiante détectée par le capteur de température (84) tombe en dessous de la première température après une commutation du mode à entraînement unique vers le mode à double entraînement résultant de la détection, par le capteur de température (84), d'une température ambiante égale ou supérieure à la première température.

3. Dispositif de commande de pompe à carburant (70) selon la revendication 1 ou 2, dans lequel l'unité de commutation de pompe (70) est configurée pour interdire une commutation du mode à double entraînement vers le mode à entraînement unique jusqu'à ce qu'une durée prédéterminée se soit écoulée depuis une commutation du mode à entraînement unique vers le mode à double entraînement.

4. Dispositif de commande de pompe à carburant (70) selon l'une quelconque des revendications 1 à 3, dans lequel
le moteur à combustion interne (10) comprend un capteur de pression de carburant (23, 43) configuré pour détecter une pression de carburant de l'un quelconque du premier passage de carburant (37, 41), du deuxième passage de carburant (57, 61), et du passage de raccordement (66),
le dispositif de commande de pompe à carburant (70) comprend une unité de commande de pompe (70) configurée pour calculer une quantité de refoulement exigée par unité de temps de la première pompe à carburant à haute pression (31) et de la deuxième pompe à carburant à haute pression (51) grâce à une commande de rétroaction basée sur un écart entre une pression de carburant réelle détectée par le capteur de pression de carburant (23, 43) et une pression de carburant de cible, et
l'unité de commutation de pompe (70) est configurée pour commuter le mode à double entraînement vers le mode à entraînement unique quand des conditions sont remplies, une des conditions étant que la quantité de refoulement exigée lorsque l'on suppose qu'une commutation du mode à double entraînement vers le mode à entraînement unique est réalisée est égale ou inférieure à la quantité de refoulement maximum par unité de temps de la première pompe à carburant à haute pression (31) et de la deuxième pompe à carburant à haute pression (51).

5. Procédé de commande d'une pompe à carburant prévue pour un moteur à combustion interne (10), selon lequel
le moteur à combustion interne (10) comprend une première pompe à carburant à haute pression (31) configurée pour refouler du carburant en augmentant la pression,
un premier passage de carburant (37, 41), à travers lequel s'écoule le carburant refoulé par la première pompe à carburant à haute pression (31),
une première soupape d'injection de carburant (42) configurée pour injecter le carburant délivré à partir du premier passage de carburant (37, 41),
une deuxième pompe à carburant à haute pression (51) configurée pour refouler du carburant en augmentant la pression,
un deuxième passage de carburant (57, 61), à travers lequel s'écoule le carburant refoulé par la deuxième pompe à carburant à haute pression (51),
une deuxième soupape d'injection de carburant (62) configurée pour injecter le carburant délivré à partir du deuxième passage de carburant (57, 61), et
un passage de raccordement (66), qui relie le premier passage de carburant (37, 41) et le deuxième passage de carburant (57, 61) l'un à l'autre, de telle sorte que le carburant à l'intérieur du premier tuyau de carburant (37, 41), et le carburant à l'intérieur du deuxième tuyau de carburant (57, 61) peuvent s'écouler l'un dans l'autre par l'intermédiaire du passage de raccordement (66) de telle sorte que la pression de carburant réelle (FPH) à l'intérieur du premier tuyau de carburant (37, 41), du deuxième tuyau de carburant (57, 61), et du passage de raccordement (66) est pratiquement la même,
**caractérisé en ce que**
le moteur à combustion interne (10) comprend en outre :
un capteur de température (84) configuré pour détecter une température ambiante de la première pompe à carburant à haute pression (31) ou de la deuxième pompe à carburant à haute pression (51),
le procédé de commande comprenant le fait de
commuter un mode d'entraînement de la première pompe à carburant à haute pression (31) et de la deuxième pompe à carburant à haute pression (51), en fonction d'un état de fonctionnement du moteur à combustion interne (10), vers un mode à double entraînement, dans lequel la première pompe à carburant à haute pression (31) et la deuxième pompe à carburant à haute pression (51) sont entraînées toutes les deux, ou bien vers un mode à entraînement unique, dans lequel l'une ou l'autre de la première pompe à carburant à haute pression (31) et de la deuxième pompe à carburant à haute pression (51) est entraînée ; et
commuter vers le mode à double entraînement dans un état où le mode à entraînement unique est réalisé dans un cas où la température ambiante détectée par le capteur de température (84) devient égale ou supérieure à une première température à laquelle le carburant à l'intérieur d'une de la première pompe à carburant à haute pression (31) et de la deuxième pompe à carburant à haute pression (51) qui a été arrêtée bout pour générer de la vapeur.
